Europäisches Patentamt

European Patent Office

Office européen des brevets

(11) Publication number: **0 171 192**
A1

## (12) EUROPEAN PATENT APPLICATION

(21) Application number: **85304850.2**

(22) Date of filing: **08.07.85**

(51) Int. Cl.⁴: **G 02 F 3/00**, G 02 F 1/39,
H 01 S 3/18

(30) Priority: **11.07.84 JP 142326/84**
**10.05.85 JP 97751/85**

(43) Date of publication of application: **12.02.86**
**Bulletin 86/7**

(84) Designated Contracting States: **DE FR GB NL**

(71) Applicant: **HITACHI, LTD., 6, Kanda Surugadai 4-chome**
**Chiyoda-ku, Tokyo 100 (JP)**

(72) Inventor: **Katsuyama, Toshio, E203, Hitachiowada**
**Apt. 1-47-2 Akatsuki-cho, Hachioji-shi Tokyo (JP)**
Inventor: **Matsumura, Hiroyoshi,**
**70-3 Komamusashidai 214-61, Kubo, Hidaka-machi**
**Iruma-gun Saitama-ken (JP)**

(74) Representative: **Paget, Hugh Charles Edward et al,**
**MEWBURN ELLIS & CO. 2/3 Cursitor Street, London**
**EC4A 1BQ (GB)**

(54) Optical bistable device.

(57) An optical bistable device (21) has a film (12) exhibiting excitonic absorption on a substrate (1). The film is of a layer structure substance such as $HgI_2$, $PbI_2$, GaS, InS, InSe or GaSe and is formed on a transparent substrate (1) of glass or the like by evaporation or vapor growth. The film (12) manifests optical bistability. The construction and the manufacture of such a device can be simple, and the device may operate at room temperature.

EP 0 171 192 A1

ACTORUM AG

-1-

## OPTICAL BISTABLE DEVICE

The present invention relates to optical bistable devices which can be used in the construction of the logic circuit and memory circuit of an optical computer and other apparatus.

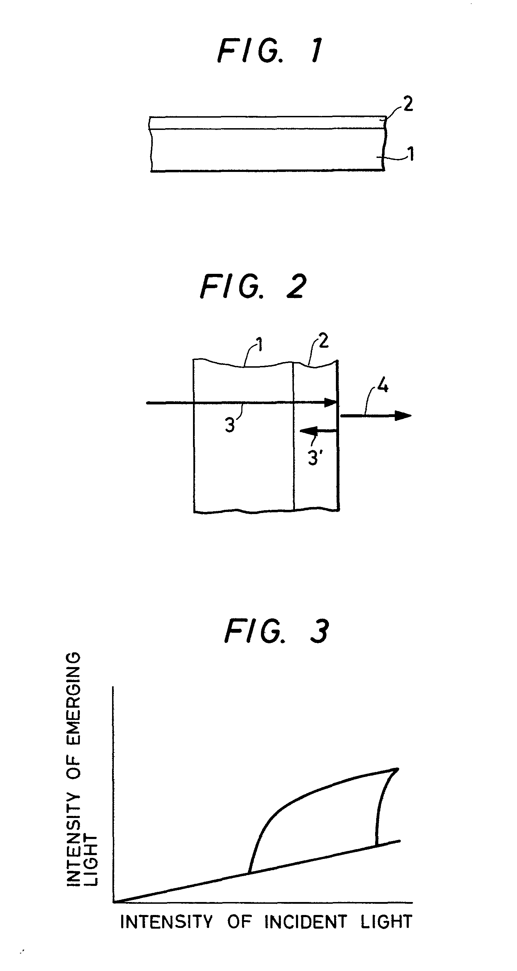

Optical bistable devices previously reported include one employing an etalon made of a GaAs single crystal (H. M. Gibbs et al., "Optical bistability in semiconductors", Appl. Phys. Lett. 35(6), 15 Sept. 1979, pp. 451-453) and one employing an InSb single-crystal etalon (D. A. B. Miller et al., "Two-beam optical signal amplification and bistability in InSb", Optics Communications, Vol. 31, No. 1, Oct. 1979, pp. 101-104). These devices, however, operated only at low temperatures of at most 120° K. An optical bistable device employing a superlattice made of GaAs and AlAs and operated at room temperature has been described subsequently (H. M. Gibbs et al., "Room temperature excitonic optical bistability in a GaAs-GaAlAs superlattice etalon", Appl. Phys. Lett., 41(3) 1 Aug. 1982 pp. 221-222). Such operation at room temperature is based on the fact that the binding energy of excitons is increased owing to the superlattice structure, resulting in the stable existence of the

0171192

-2-

excitons. The existence of the excitons results in increase in the refractive index. When an etalon 2 formed on a substrate 1 as snown in Fig. 1 of the accompanying drawings is subjected to the incidence of light as shown in Fig. 2, incident light 3 and reflected light 3' interfere within the etalon 2. When the thickness of the etalon 2 is previously preset to be an integral multiple (including the integer one) of the wavelength of the incident light, the peaks of the incident light 3 and the reflected light 3' lie one over the other, and the quantity of light within the etalon increases. Under these conditions, if the quantity of incident light 3 is small, the number of excitons is small, so that the refractive index does not become high. As a result, most of the incident light 3 passes through the etalon 2 and emerges therefrom. The quantity of output light 4 at that time is naturally small.

If the quantity of incident light is large, a large number of excitons are generated, so that the refractive index increases. As a result, the reflected light 3' increases in quantity. It interferes with the incident light 3 and lies over the same, to increase the quantity of light within the etalon more and more. Accordingly, the number of excitons increases more and more, and the refractive index increases to further increase the quantity of light within the etalon.

-3-

Thus, even when the quantity of incident light remains constant, the quantity of light within the etalon becomes larger than at the time of the incidence. Part of this light emerges from the etalon, and the corresponding quantity of light is much larger than in the case where there is a small quantity of the incident light. Besides, in this state, even when the quantity of incident light is reduced, the quantity of light within the etalon decreases little, and the relationship between the incident light 3 and the output light 4 exhibits the so-called bistability as illustrated in Fig. 3. It is well known that this characteristic is relevant to a logic function and a memory function.

As stated above, a superlattice based on GaAs and AlAs manifests optical bistability at room temperature. However, this superlattice has the disadvantages that its manufacture is complicated and that difficult techniques are required, and it can be said that its implementation in practical use is very difficult.

An object of the present invention is to provide an optical bistable device which may operate at room temperature and which may be readily manufactured.

The invention is set out in claim 1.

The present inventors have researched optical bistabilities in relation to substances in which the

-4-

binding energy of excitons is considered great and which are structurally simple. As a result, it has been found that an etalon constructed of a thin film crystal of _inter alia_ HgI$_2$, PbI$_2$ or GaSe has a stable optical bistability. The crystal structures of such substances are layer structures, and the respective layers are bound by weak Van der Waals forces. From physical considerations, such substances are judged to have high binding energy of excitons. It has also been found that the thin film crystals of such substances can be produced by simple processes such as evaporation and are not affected by the crystal properties of substrates.

Furthermore, since the thin film crystal may be grown and formed so as to have its c-axis in a direction perpendicular to the plane of a substrate, an optical bistable device which is very easy to use can be fabricated.

Embodiments of the invention are described below by way of example with reference to the accompanying drawings, in which:-

Fig. 1 is a general view of the construction of an etalon;

Fig. 2 is a view of an etalon explaining optical bistability;

Fig. 3 is a typical graphical diagram of optical bistability;

Fig. 4 is a view of a device embodying the present invention;

Fig. 5 is a view illustrating the c-axis of a thin film crystal of Fig. 4;

Fig. 6 is a view of a device of the invention showing incident light and output light;

Fig. 7 is a view of a further device embodying the present invention;

Fig. 8 is a diagrammatic view of manufacture of embodiments of the invention; and

Fig. 9 is a diagram showing the optical bistability of the embodiments of Fig. 8.

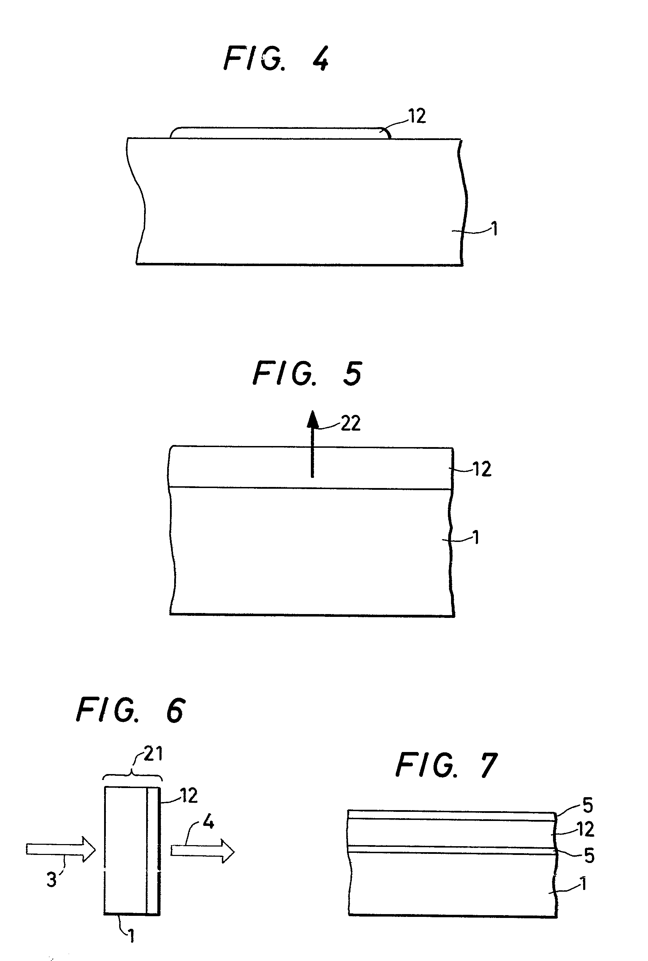

Fig. 4 shows the structure of one optical bistable device according to the present invention.

A substrate 1 is made of a substance which transmits light of a wavelength necessary for the operation of the optical bistable device, and which is glass by way of example.

The substrate 1 is overlaid by a thin film crystal 12 of a substance in which the binding energy of excitons is great (hereinbelow called the "exciton substance"), such as $HgI_2$, $PbI_2$ or GaSe. As shown in Fig. 5, the c-axis 22 of the thin film crystal 12 is perpendicular to the plane of the substrate 1, and optical bistability is attained when the light is caused to enter in this direction. That is to say, when incident light 3 is caused to enter substantially perpendicularly to the optical bistable device 21 as illustrated in Fig. 6, the device manifests optical bistability as shown in Fig. 3 between the incident light 3 and output light 4.

In addition, when thin films 5 of a substance of large reflection factor are deposited on both the surfaces of the thin film crystal 12 of the exciton substance as shown in Fig. 7, optical bistability is realised with a smaller quantity of light.

By the present invention, an optical bistable device which has a very simple structure, which is easy to manufacture and which operates at room temperatures may be provided.

It has been found that the present invention can also be performed with GaS, InS or InSe. No special relation was noted between the crystal properties of the layer structure substance and the substrate.

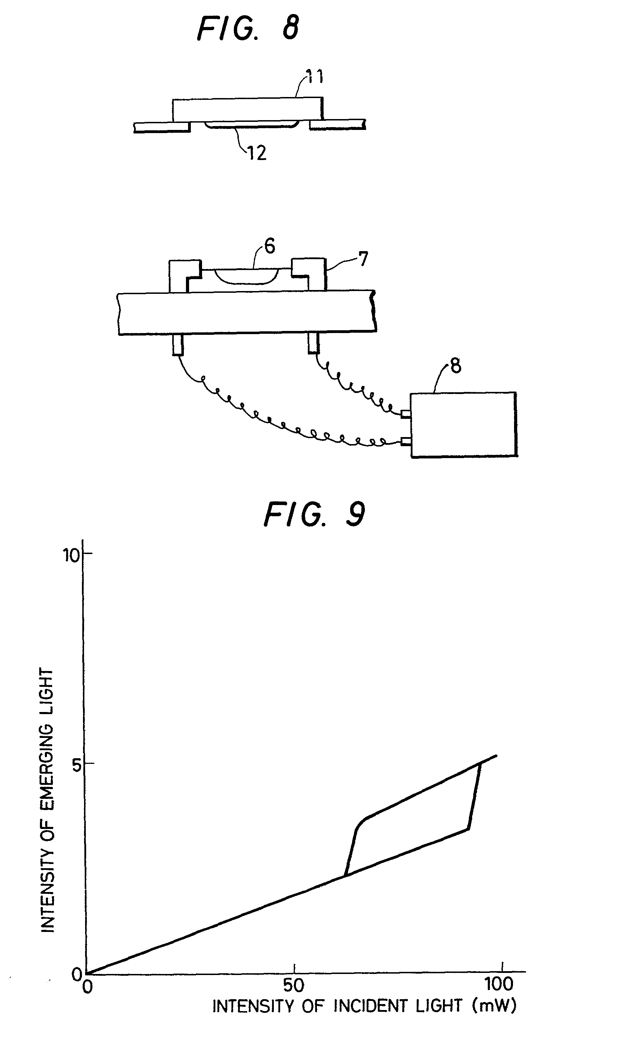

Particular Examples embodying the present invention will now be described with reference to Fig. 8.

Example 1:

$HgI_2$ of purity 99.999% was put in the boat of a vacuum vaporizer (including a boat 6, boat supporting electrodes 7, and a power source 8), and the boat was heated to 800°C to form a thin film crystal 12 on a

-7-

silica glass substrate 11, whereby an optical bistable device was fabricated. The thickness of the thin film crystal 12 was 2.65 µm. A laser beam having a wavelength of 530 nm (light emitter from a dye laser pumped by an $N_2$ laser) was caused to enter the thin film crystal with a spot diameter of 5 µm from the side of the substrate 11. The relation between the intensity of the incident light and that of output light was measured at a room temperature (20°C). Bistability was exhibited as shown in Fig. 9.

Example 2:

As in Example 1, $PbI_2$ of purity 99.999% was evaporated onto a silica glass substrate 11 to form a thin film crystal 12. The thickness of the thin film crystal 12 was 2.45 µm. A laser beam having a wavelength of 490 nm (light emitter from a dye laser pumped by an $N_2$ laser) was caused to enter the thin film crystal with a spot diameter of 4 µm. When the relation between the intensity of the incident light and that of output light was measured at 20°C, bistability similar to that shown in Fig. 9 was manifested.

Example 3:

As in Example 1, GaSe of purity 99.999% was evaporated onto a silica glass substrate to form a thin film crystal. The thickness of the thin film crystal was 2.95 µm. A laser beam having a wavelength

-8-

of 590 nm (light emitted from a dye laser pumped by an $N_2$ laser) was caused to enter the thin film crystal with a spot diameter of 4 μm. When the relation between the intensity of the incident light and that of output light was measured at 20°C, bistability similar to that shown in Fig. 9 was manifested.

Example 4:

Using vapor growth, a large number of small thin-film crystals were prepared from $HgI_2$ of purity 99.999%. Films 2.65 μm thick were selected from among the crystals prepared, and a laser beam having a wavelength of 530 nm (light emitted from a dye laser pumped by an $N_2$ laser) was caused to enter each film perpendicularly. The spot diameter of the laser beam was 4μm. When the relation between the intensity of the incident light and that of output light was measured at 20°C, bistability similar to that shown in Fig. 9 was manifested.

Even when GaS, InS or InSe was used, an optical bistable device could be fabricated as in the above example, by evaporation or by vapor growth.

CLAIMS

1.      An optical bistable device (21) comprising a transparent substrate (1), and a film (12) of a layer structure substance exhibiting excitonic absorption formed on said substrate and having a thickness which is substantially an integral multiple of the wavelength of light to be subjected to the excitonic absorption.

2.      An optical bistable device according to claim 1, wherein said layer structure substance is at least one of $HgI_2$, $PbI_2$, GaS, InS, InSe and GaSe.

3.      An optical bistable device according to claim 1 or claim 2, wherein said substrate (1) is made of glass.

4.      An optical bistable device according to any one of claims 1 to 3, wherein said film (12) is formed by evaporation.

5.      An optical bistable device according to any one of claims 1 to 3 wherein said film (12) is formed by vapor growth.

6.      An optical bistable device according to any one of claims 1 to 5 having reflecting layers (5) adjacent the respective sides of the film (12).

## FIG. 1

## FIG. 2

## FIG. 3

**FIG. 4**

**FIG. 5**

**FIG. 6**

**FIG. 7**

## FIG. 8

## FIG. 9

INTENSITY OF EMERGING LIGHT

INTENSITY OF INCIDENT LIGHT (mW)

European Patent
Office

**EUROPEAN SEARCH REPORT**

| | DOCUMENTS CONSIDERED TO BE RELEVANT | | EP 85304850.2 | |
|---|---|---|---|---|

| Category | Citation of document with indication, where appropriate, of relevant passages | Relevant to claim | CLASSIFICATION OF THE APPLICATION (Int. Cl 4) |
|---|---|---|---|
| D,A | APPLIED PHYSICS LETTERS, vol. 41, no. 3, August 1, 1982 <br><br> H.M. GIBBS et al. "Room-temperature excitonic optical bistability in a GaAs-GaAlAs superlattice etalon" pages 221-222 <br><br>   * Totality * <br><br> -- | 1 | G 02 F 3/00 <br><br> G 02 F 1/39 <br><br> H 01 S 3/18 |
| A | DE - A1 - 3 335 318 (HONEYWELL) <br><br>   * Page 8, line 1 - page 10, line 26; page 11, line 32 - page 13, line 16; page 15, line 13 - page 22, line 19; fig. 8-10 * <br><br> -- | 1 | |
| A | DE - A1 - 2 747 228 (WESTERN) <br><br>   * Page 16, line 6 - page 17, line 14; page 27, line 16 - page 30, line 9; page 45, line 12 - page 47, line 13 * <br><br> -- | 1,6 | **TECHNICAL FIELDS SEARCHED (Int Cl 4)** <br><br> G 02 F 1/00 <br><br> G 02 F 3/00 <br><br> H 01 S 3/00 |
| A | GB - A - 2 114 313 (ASEA) <br><br>   * Fig. 1a,b,2; page 1, lines 94-110 * <br><br> -- | 1,6 | |
| A | IEEE JOURNAL OF QUANTUM ELECTRONICS, vol. QE-17, no. 3, March 1981 <br><br> D.A.B. MILLER et al. "Optical Bistability in Semiconductors" pages 312-317 <br><br>   * Abstract; Chps. I,II,IV * <br><br> -- | | |

The present search report has been drawn up for all claims

| Place of search | Date of completion of the search | Examiner |
|---|---|---|
| VIENNA | 18-10-1985 | GRONAU |

0271192

European Patent
Office

**EUROPEAN SEARCH REPORT**

Application number

| | | | |
|---|---|---|---|
| **DOCUMENTS CONSIDERED TO BE RELEVANT** | | | EP 85304850.2 |

| Category | Citation of document with indication. where appropriate, of relevant passages | Relevant to claim | CLASSIFICATION OF THE APPLICATION (Int Cl 4) |
|---|---|---|---|
| A | US - A - 4 410 239 (KAPLAN)  *  Fig. 1,2  * ---- | | |
| | | | **TECHNICAL FIELDS SEARCHED (Int Cl 4)** |
| | The present search report has been drawn up for all claims | | |

| Place of search | Date of completion of the search | Examiner |
|---|---|---|
| VIENNA | 18-10-1985 | GRONAU |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82